(19) Europäisches Patentamt
European Patent Office
Office européen des brevets

(11) **EP 3 162 815 B1**

(12) **EUROPEAN PATENT SPECIFICATION**

(45) Date of publication and mention
of the grant of the patent:
**26.12.2018 Bulletin 2018/52**

(51) Int Cl.:
**C08F 214/26** *(2006.01)*  **C09D 5/03** *(2006.01)*
**C09D 127/18** *(2006.01)*  *C08F 2/38* *(2006.01)*

(21) Application number: **15811275.5**

(22) Date of filing: **19.06.2015**

(86) International application number:
**PCT/JP2015/067729**

(87) International publication number:
**WO 2015/198986 (30.12.2015 Gazette 2015/52)**

(54) **ETHYLENE/TETRAFLUOROETHYLENE COPOLYMER, METHOD FOR ITS PRODUCTION, POWDER COATING MATERIAL AND MOLDED ARTICLE**

ETHYLEN-/TETRAFLUORETHYLENCOPOLYMER, VERFAHREN ZU SEINER HERSTELLUNG, PULVERBESCHICHTUNGSMATERIAL UND FORMKÖRPER

COPOLYMÈRE D'ÉTHYLÈNE/TÉTRAFLUOROÉTHYLÈNE, SON PROCÉDÉ DE PRODUCTION, REVÊTEMENT EN POUDRE ET OBJET MOULÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.06.2014 JP 2014128992**

(43) Date of publication of application:
**03.05.2017 Bulletin 2017/18**

(73) Proprietor: **AGC Inc.**
**Tokyo 100-8405 (JP)**

(72) Inventors:
• **AIDA, Shigeru**
**Tokyo 100-8405 (JP)**
• **TAGUCHI, Daisuke**
**Tokyo 100-8405 (JP)**

(74) Representative: **Müller-Boré & Partner**
**Patentanwälte PartG mbB**
**Friedenheimer Brücke 21**
**80639 München (DE)**

(56) References cited:
**WO-A1-94/21696**  **WO-A1-2008/069278**
**WO-A1-2008/069278**  **JP-A- H0 733 806**
**JP-A- 2005 029 704**  **JP-A- 2014 015 551**
**JP-A- 2014 015 551**  **US-A1- 2003 153 703**
**US-A1- 2004 001 956**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to an ethylene/tetrafluoroethylene copolymer, a powder coating material, a molded article, and a method for producing an ethylene/tetrafluoroethylene copolymer.

BACKGROUND ART

A coating film formed by a powder coating material comprising an ethylene/tetrafluoroethylene copolymer is excellent in heat resistance, chemical resistance, weather resistance and mechanical properties. Therefore, the powder coating material comprising an ethylene/tetrafluoroethylene copolymer is useful for a lining film to be formed on a surface of a metal substrate such as steel material, for protection of the surface from corrosion, etc.

However, usually, a fluororesin has low adhesion to a metal substrate and may sometimes be not sufficient in adhesion durability, and therefore, it is an important subject to improve the adhesion between the fluororesin and the metal substrate.

In recent years, in order to improve the adhesion between the fluororesin and the metal substrate, a method of forming a primer layer between the coating film of the fluororesin and the metal substrate has been disclosed.

For example, Patent Document 1 discloses a method for forming a coating film of a fluororesin, wherein a surface of a metal substrate is heat-treated at from 200 to 600°C in an atmosphere containing oxygen, then a primer made of a predetermined mixture is applied on the surface to form a primer layer, and then a coating film of a fluororesin is formed on the primer layer.

Further, a method for improving the adhesion between a fluororesin and a metal substrate without forming a primer layer, has been disclosed.

For example, Patent Document 2 discloses an ethylene/tetrafluoroethylene copolymer having the adhesion between a fluororesin and a metal substrate improved by introducing terminal groups based on a chain transfer agent containing chlorine atoms i.e. (3,3-dichloro-1,1,1,2,2-pentafluoropropane).

On the other hand, it is known that the heat resistance of the coating film is impaired if an ethylene/tetrafluoroethylene copolymer contains chlorine atoms, and in Patent Document 3, an ethylene/tetrafluoroethylene copolymer not substantially containing chlorine atoms (at most 70 ppm) has been proposed.

PRIOR ART DOCUMENTS

PATENT DOCUMENTS

Patent Document 1: JP-A-2006-167689
Patent Document 2: JP-A-2014-15551
Patent Document 3: WO2008/069278

DISCLOSURE OF INVENTION

TECHNICAL PROBLEM

It is an object of the present invention to provide an ethylene (hereinafter referred to also as "E")/tetrafluoroethylene (hereinafter referred to also as "TFE") copolymer (hereinafter referred to also as "ETFE copolymer") whereby a formed coating film is excellent in adhesion to a metal substrate and excellent in heat resistance, a method for its production, a powder coating material comprising the ETFE copolymer, and a molded article having a coating film formed from the powder coating material.

SOLUTION TO PROBLEM

The present invention has the following constructions.

[1] An ETFE copolymer, in which the content of chlorine atoms covalently bonded to any carbon atoms in the copolymer is from 100 to 500 mass ppm.

[2] The copolymer according to [1], wherein the ethylene/tetrafluoroethylene copolymer has structural units based on ethylene, structural units based on tetrafluoroethylene and structural units based on another monomer, and has chlorine atoms covalently bonded to any carbon atoms in the copolymer.

[3] The copolymer according to [1] or [2], wherein the chlorine atoms are chlorine atoms covalently bonded to carbon atoms at terminals in the ethylene/tetrafluoroethylene copolymer.

[4] The copolymer according to any one of [1] to [3], which does not contain a dichloromethylene group.

[5] The copolymer according to any one of [1] to [4], wherein the total content of structural units based on ethylene and structural units based on tetrafluoroethylene in the copolymer is from 80 to 99.5 mol%, based on all structural units in the copolymer.

[6] A coating material comprising the copolymer as defined in any one of [1] to [5].

[7] A powder coating material comprising the copolymer as defined in any one of [1] to [5].

[8] A molded article comprising a metal substrate and a coating film formed by the powder coating material as defined in [7], on a surface of the metal substrate.

[9] A method for producing the copolymer as defined in any one of [1] to [5], characterized in that a monomer component comprising ethylene and tetrafluoroethylene is subjected to a polymerization reaction by using a chain transfer agent having a chlorine atom, to introduce into the copolymer all or some of the chlorine atoms covalently bonded to any carbon atoms in the copolymer.

[10] The method for producing the copolymer according to [9], wherein the monomer component comprising ethylene and tetrafluoroethylene is copolymerized in the presence of a chain transfer agent having a chlorine atom, a polymerization solvent containing no chlorine atom and a polymerization initiator.

[11] The production method according to [10], wherein tetrafluoroethylene, ethylene and a compound represented by $CH_2=CX(CF_2)_nY$ (wherein X and Y are each independently a hydrogen atom or a fluorine atom, and n is an integer of from 2 to 8) are copolymerized in the presence of a chain transfer agent containing 1,3-dichloro-1,1,2,2,3-pentafluoropropane, at least one polymerization medium selected from the group consisting of perfluorocarbons, hydrofluorocarbons and hydrofluoroalkyl ethers, and a polymerization initiator

[12] The production method according to [11], wherein 1,3-dichloro-1,1,2,2,3-pentafluoropropane is present in an amount of from 0.05 to 10 mass%, based on the total mass of all monomer components.

[13] The production method according to any one of [9] to [12], wherein the chain transfer agent further contains a chain transfer agent having no chlorine atom.

[14] The production method according to [13], wherein the chain transfer agent having no chlorine atom is methanol.

[15] The production method according to [14], wherein the chain transfer agent comprises 1,3-dichloro-1,1,2,2,3-pentafluoropropane and methanol, and when the content by mass of methanol is set to be 1, the content by mass of 1,3-dichloro-1,1,2,2,3-pentafluoropropane is from 0.1 to 2.0.

ADVANTAGEOUS EFFECTS OF INVENTION

According to the ETFE copolymer of the present invention, the formed coating film is excellent in adhesion to a metal substrate and excellent in heat resistance.

DESCRIPTION OF EMBODIMENTS

In this specification, repeating units formed by polymerization of a monomer are referred to as "structural units".

[ETFE copolymer]

The ETFE copolymer of the present invention is characterized in that it has at least structural units based on E and structural units based on TFE, and further, the content of chlorine atoms covalently bonded to carbon atoms in the copolymer is from 100 to 500 mass ppm.

(Structural units based on E and structural units based on TFE)

Structural units based on E are repeating units to be formed by polymerization of ethylene. By having structural units based on E, a coating film formed by a powder coating material containing the ETFE copolymer (hereinafter simply referred to also as the "coating film") will be one excellent in mechanical strength and film-forming properties.

Structural units based on TFE are repeating units to be formed by polymerization of tetrafluoroethylene. By having structural units based on TFE, the coating film will be one excellent in heat resistance, weather resistance, chemical resistance, gas barrier properties and fuel barrier properties.

In the ETFE copolymer, the molar ratio of structural units based on E to structural units based on TFE (i.e. the E/TFE ratio) is preferably from 80/20 to 20/80, more preferably from 70/30 to 30/70, most preferably from 50/50 to 35/65.

If the E/TFE ratio is larger than the above upper limit value, the heat resistance, weather resistance, chemical resistance, liquid chemical permeation-preventing properties, etc. of the coating film, may, sometimes, be lowered. On the other hand, if the E/TFE ratio is less than the above lower limit value, the mechanical strength, film-forming properties, etc. of the coating film may, sometimes, be lowered. When E/TFE ratio is in the above range, the coating film will be one excellent in heat resistance, weather resistance, chemical resistance, liquid chemical permeation-preventing properties, mechanical strength, film forming properties, etc.

In a case where the ETFE copolymer has structural units based on another monomer as described below, the total content of structural units based on E and structural units based on TFE, is preferably from 80 to 99.5 mol%, more preferably from 90 to 99.3 mol%, most preferably from 95 to 99.2 mol%, to all structural units in the ETFE copolymer.

(Structural units based on another monomer)

The ETFE copolymer may have structural units based on another monomer other than structural units based on E and structural units based on TFE. By having structural units based on another monomer, the coating film will be better in mechanical properties or film-forming properties.

Another monomer may, for example, be a fluorinated monomer other than TFE, a polar functional group-containing monomer (but excluding one having a fluorine atom), or an $\alpha$-olefin other than E.

<Fluorinated monomer other than TFE>

The fluorinated monomer is not particularly limited so long as it has fluorine and is one other than TFE. As such a fluorinated monomer, the following (1) to (6) may be mentioned.

(1) A compound (hereinafter referred to also as "FAE") represented by the formula $CH_2=CX(CF_2)_nY$ (wherein X and Y are each independently a hydrogen or fluorine atom, and n is an integer of from 2 to 8). (2) A fluoroolefin having hydrogen atoms on an unsaturated group, such as vinylidene fluoride (VDF), vinyl fluoride (VF), trifluoroethylene, hexafluoroisobutylene (HFIB), etc. (3) A fluoroolefin having no hydrogen atom on an unsaturated group (but, excluding TFE), such as hexafluoropropylene (hereinafter referred to also as "HFP"), etc.

(4) A perfluoro(alkyl vinyl ether) (hereinafter referred to as "PAVE"), such as perfluoro(methyl vinyl ether) (PMVE), perfluoro(ethyl vinyl ether) (PEVE), perfluoro(propyl vinyl ether) (PPVE), perfluoro(butyl vinyl ether) (PBVE), etc. (5) A perfluoroalkyl vinyl ether having two unsaturated bonds, such as $CF_2=CFOCF_2CF=CF_2$, $CF_2=CFO(CF_2)_2CF=CF_2$, etc. (6) A fluorinated monomer having an aliphatic ring structure, such as perfluoro(2,2-dimethyl-1,3-dioxole) (PDD), 2,2,4-trifluoro-5-trifluoromethoxy-1,3-dioxole, perfluoro(2-methylene-4-methyl-1,3-dioxolane), etc.

As the fluorinated monomer other than TFE, one type may be used alone, or two or more types may be used in combination. Further, among the above (1) to (6), (1) is preferred with a view to improving the characteristics such as heat resistance, chemical resistance, weather resistance, non-tackiness, etc., of the coating film.

With respect to FAE of the above (1), in the formula $CH_2=CX(CF_2)_nY$ (wherein X and Y are each independently a hydrogen or fluorine atom, and n is an integer of from 2 to 8), if n is less than 2, the characteristics of the coating film may become insufficient (e.g. formation of stress cracking, etc.). On the other hand, if n in the formula exceeds 8, the polymerization reactivity may become insufficient. When n is from 2 to 8, the coating film will be excellent in heat resistance, chemical resistance, weather resistance, non-tackiness etc., and will be excellent in the polymerization reactivity of FAE.

FAE may, specifically, be $CH_2=CF(CF_2)_2F$, $CH_2=CF(CF_2)_3F$, $CH_2=CF(CF_2)_4F$, $CH_2=CF(CF_2)_5F$, $CH_2=CF(CF_2)_8F$, $CH_2=CF(CF_2)_2H$, $CH_2=CF(CF_2)_3H$, $CH_2=CF(CF_2)_4H$, $CH_2=CF(CF_2)_5H$, $CH_2=CF(CF_2)_8H$, $CH_2=CH(CF_2)_2F$, $CH_2=CH(CF_2)_3F$, $CH_2=CH(CF_2)_4F$, $CH_2=CH(CF_2)_5F$, $CH_2=CH(CF_2)_6F$, $CH_2=CH(CF_2)_8F$, $CH_2=CH(CF_2)_2H$, $CH_2=CH(CF_2)_3H$, $CH_2=CH(CF_2)_4H$, $CH_2=CH(CF_2)_5H$, $CH_2=CH(CF_2)_8H$, etc.

Among them, FAE of the above $CH_2=CH(CF_2)_nY$ wherein n is from 2 to 6 is preferred, and wherein n is from 2 to 4 is more preferred. In this range, the coating film will be remarkably excellent in stress cracking resistance. As FAE, perfluorobutyl ethylene represented by $CH_2=CH(CF_2)_4F$ is particularly preferred.

As FAE, one type may be used alone, or two or more types may be used in combination.

In the case where the ETFE copolymer has structural units based on FAE, the content of structural units based on FAE is preferably from 0.01 to 20 mol%, more preferably from 0.1 to 10 mol%, most preferably from 0.8 to 5 mol%, in all structural units. If the content of FAE is less than 0.01 mol%, stress cracking resistance of the coating film is likely to be low, and there will be a case where a breakage phenomenon such as cracking under stress occurs. On the other hand, if it exceeds 20 mol%, the mechanical strength of the coating film may become low. When the content of FAE is in the above range, the coating film will be excellent in properties such as stress cracking resistance, mechanical strength, etc.

<Polar functional group-containing monomer>

The polar functional group-containing monomer is not particularly limited, so long as it has a polar functional group and does not have a fluorine atom.

The polar functional group in the polar functional group-containing monomer may, for example, be a hydroxy group, a carboxy group, an epoxy group, an acid anhydride residue, etc. Among them, an acid anhydride residue is preferred, from such a viewpoint that the monomer will thereby be more easily dissolved in a polymerization medium containing the later-described medium compound (1) and thus will be easily added to the polymerization reaction system.

Specific polar functional group-containing monomers may, for example, be vinyl ethers having a hydroxy group or an epoxy group; maleic acid, itaconic acid, citraconic acid, undecylenic acid, etc. having a carboxy group; maleic anhydride, itaconic anhydride, citraconic anhydride, himic acid anhydride, etc. having an acid anhydride residue, etc. Among them, from such a viewpoint that it is more easily dissolved in a polymerization medium containing the later-described medium compound (1) and thus is easily added to the polymerization reaction system, the polar functional group-containing monomer is preferably maleic anhydride, itaconic anhydride or himic acid anhydride, more preferably at least one among itaconic anhydride and himic acid anhydride.

As the polar functional group-containing monomer, one type may be used alone, or two or more types may be used in combination.

In the case where the ETFE copolymer has units based on a polar functional group-containing monomer, the content of structural units based on the polar functional group-containing monomer is preferably from 0.01 to 5 mol%, more preferably from 0.05 to 3 mol%, most preferably from 0.1 to 1 mol%, to all structural units. When the content of the polar functional group-containing monomer is at least the above lower limit value, adhesion between the coating film and the metal substrate becomes better. On the other hand, when the content of the polar functional group-containing monomer is at most the above upper limit value, it is possible to prevent deterioration in the adhesion between the coating film and the metal substrate due to formation of an oligomer of only the polar functional group-containing monomer.

<$\alpha$-Olefin>

The $\alpha$-olefin is not particularly limited so long as it is one other than E.

The $\alpha$-olefin may, for example, be propylene, butene, etc. Among them, propylene or 1-butene is preferred, since the physical properties such as heat resistance, mechanical characteristics, etc. of the coating film, thereby become better.

As the $\alpha$-olefin, one type may be used alone, or two or more types may be used in combination.

In the case where the ETFE copolymer has structural units based on an $\alpha$-olefin, the content of structural units based on the $\alpha$-olefin is preferably from 0.01 to 20 mol%, more preferably from 0.1 to 10 mol%, most preferably from 0.5 to 5 mol%, to all structural units. Within this range, it is possible to adjust the coating properties and the mechanical properties of the coating film without impairing the heat resistance, such being preferred.

(Chlorine atoms)

Chlorine atom are covalently bonded to any carbon atoms in the ETFE copolymer. By the presence of chlorine atoms in the ETFE copolymer, adhesion between the coating film and the metal substrate is exhibited.

However, chlorine atoms in the ETFE copolymer have low thermal stability and may cause molecular chain scission, thus leading to a decrease in the molecular weight of the ETFE copolymer. Therefore, with a view to preventing impairment of the properties such as the heat resistance of the ETFE copolymer due to the molecular weight reduction, it is preferred that chlorine atoms are covalently bonded to carbon atoms at terminal groups in the ETFE copolymer. When chlorine atoms are present at terminals in the ETFE copolymer, it is possible to prevent reduction in the molecular weight as compared with a case where they are present at the center.

Derivation of chlorine atoms is not particularly limited, and for example, they may be chlorine atoms derived from a monomer, or they may be chlorine atoms derived from an additive. From such a viewpoint that the content of chlorine atoms can be more easily adjusted, chlorine atoms derived from an additive are preferred, and among various additives, chlorine atoms derived from a chain transfer agent are preferred from such a viewpoint that they can be more easily covalently bonded to carbon atoms at terminal groups in the ETFE copolymer,.

Here, terminals of the copolymer mean terminals of a chain having the longest chain length among chains of structural units forming the copolymer, and chlorine atoms are preferably covalently bonded to at least one location of such terminals.

The content of chlorine atoms is 100 to 500 mass ppm. Here, the content of chlorine atoms is mass ppm of chlorine atoms contained in the ETFE copolymer, to the mass of the ETFE copolymer. The content of chlorine atoms is preferably from 120 to 450 mass ppm, more preferably from 150 to 400 mass ppm, further preferably from 150 to 350 mass ppm, particularly preferably from 200 to 250 mass ppm.

When the content of chlorine atoms is at least the above lower limit value, at the time of applying the powder coating material comprising the ETFE copolymer on a metal substrate surface, a sufficient amount of hydrochloric acid is generated by heating, and this hydrochloric acid will properly corrode the metal substrate surface to enhance the adhesion between the coating film and the metal substrate. On the other hand, when it is at most the above upper limit value, the ETFE copolymer is less likely to be thermally decomposed and will be excellent in properties such as heat resistance.

Further, chlorine atoms contained in the ETFE copolymer are preferably not present as a dichloromethylene group ($-CCl_2-$) in ETFE copolymer. For example, 1,3-dichloro-1,1,2,2,3-pentafluoropropane (hereinafter referred to as "AK225cb") has no dichloromethylene group in the structure, and therefore, it is preferred to use AK225cb as a chain transfer agent. If a dichloromethylene group is present in the ETFE copolymer, the ETFE copolymer may undergo coloration when heated and may be inferior in heat resistance. On the other hand, when no dichloromethylene group is contained in the ETFE copolymer, the copolymer will be excellent in heat resistance.

(Q value)

The volume flow rate (hereinafter referred to as "Q-value") of the ETFE copolymer is preferably from 0.1 to 500 $mm^3$/sec., more preferably from 0.5 to 200 $mm^3$/sec., most preferably from 1 to 100 $mm^3$/sec. The Q value is an index representing the melt flowability of the ETFE copolymer and becomes an index for the molecular weight. The larger the Q value, the lower the molecular weight, and the smaller the Q value, the higher the molecular weight. The Q value is the extrusion rate at the time of extruding a fluorinated copolymer into an orifice having a diameter of 2.1 mm and a length of 8 mm under a load 7 kg at a temperature higher by 50°C than the melting point of the resin by using a flow tester (for example, CFT-100D, manufactured by Shimadzu Corporation, etc.).

When the Q value of the ETFE copolymer is at most the above upper limit value, the coating film will be more excellent in mechanical strength, and when it is at least the above lower limit value, uniformity in the thickness of the coating film becomes better.

(Melting point)

The melting point of the ETFE copolymer is preferably from 150 to 280°C, more preferably from 180 to 275°C, most preferably from 240 to 265°C. When the melting point of the ETFE copolymer is at least the above lower limit value, the heat resistance of the coating film becomes better. On the other hand, when it is at most the above upper limit value, the temperature at the time of processing can be made lower.

(Production method)

The method for producing the ETFE copolymer comprises copolymerizing a monomer component which comprises at least ethylene and tetrafluoroethylene and which may contain another monomer, in the presence a chain transfer agent, a polymerization medium and a polymerization initiator.

The polymerization method for the production of the ETFE copolymer may be a method such as suspension polymerization, solution polymerization, emulsion polymerization, etc., and among them, suspension polymerization or solution polymerization is preferred.

The polymerization conditions are not particularly limited. The polymerization temperature is preferably from 0 to 100°C, more preferably from 20 to 90°C. The polymerization pressure is preferably from 0.1 to 10 MPa, more preferably 0.5 to 3 MPa. The polymerization time is preferably from 1 to 30 hours, more preferably from 2 to 20 hours.

As a method of adjusting the content of chlorine atoms in the ETFE copolymer in a range of from 100 to 500 mass ppm, the following method $\alpha$ and method $\beta$, etc. may be mentioned.

Method $\alpha$: A method of adding a chlorine atom-introducing compound to the polymerization reaction system, to introduce chlorine atoms at terminals of the ETFE copolymer.

Method $\beta$: A method of conducting copolymerization by blending a monomer containing a chlorine atom in addition to E and TFE as monomer components.

Among the methods $\alpha$ and $\beta$, the method $\alpha$ is preferred in that it is thereby easier to adjust the content of chlorine atoms in the ETFE copolymer and easier to covalently bond chlorine atoms to carbon atoms at terminal groups of the ETFE copolymer, and it is thereby possible to make the properties such as heat resistance less likely to be impaired The chlorine atom-introducing compound in the method $\alpha$ is not particularly limited, but may, for example, be a chain transfer agent having a chlorine atom, a polymerization initiator having a chlorine atom, etc.

All or some of chlorine atoms in the ETFE copolymer are preferably introduced by using a transfer agent having a chlorine atom, since it is thereby possible to introduce chlorine atoms into terminal groups of the ETFE copolymer, and it is thereby easy to adjust the amount of chlorine atoms to be introduced.

The abundance, in the polymerization reaction system, of the chlorine atom-introducing compound in the method $\alpha$, is preferably from 0.05 to 10 mass%, more preferably from 0.1 to 5 mass%, most preferably from 0.4 to 3 mass%, based on the total mass of all monomer components. When the abundance, in the polymerization reaction system, of the chlorine atom-introducing compound in the method $\alpha$, is at least the above lower limit value, it is possible to sufficiently introduce chlorine atoms into ETFE copolymer, whereby adhesion between the coating film and the metal substrate becomes more superior. On the other hand, when it is at most the above upper limit value, the amount of chlorine atoms to be incorporated in the ETFE copolymer will not be too much, whereby lowering of the heat resistance of the coating film can be prevented.

The monomer containing a chlorine atom in the method $\beta$, may, for example, be a chlorofluoro-olefin such as chlorotrifluoroethylene, etc., a hydrochlorofluoro-olefin such as monochlorodifluoroethylene, monochloromonofluoroethylene, etc., a hydrochloro-olefin such as vinyl chloride, 1,2-dichloroethylene, etc.

<Chain transfer agent>

In this specification, a chain transfer agent means a compound capable of terminating a polymerization reaction in such a manner that a hydrogen atom or chlorine atom is withdrawn by a radical at a terminal in a copolymer, and the hydrogen atom or chlorine atom is then bonded to the terminal of the copolymer, to stop the polymerization reaction. Particularly preferred is a compound capable of terminating a polymerization reaction by a hydrogen atom of a chain transfer agent which is withdrawn and then bonded to a terminal of the copolymer. By properly adjusting the abundance of the chain transfer agent in the polymerization reaction system, it is possible to adjust the molecular weight of the ETFE copolymer. Further, the chain transfer agent having a hydrogen atom or chlorine atom withdrawn may generate a radical and sometimes initiate a polymerization reaction.

Chain transfer agents may be divided into a chain transfer agent having a chlorine atom, and a chain transfer agent having no chlorine atom. According to the chain transfer reaction by a chain transfer agent having a chlorine atom, a chlorine atom is introduced at a terminal of the ETFE copolymer. Among them, it is particularly preferred to employ such a chain transfer agent that a hydrogen atom in the chain transfer agent having a chlorine atom is withdrawn by a radical at a terminal in a copolymer during a polymerization reaction, to terminate the polymerization reaction, and a radical generated from the chain transfer agent having the hydrogen atom withdrawn is capable of initiating a polymerization reaction.

The chain transfer agent having a chlorine atom may, for example, be a hydrochlorocarbon such as methyl chloride, methylene chloride, chloroform, 1,2-dichloroethane, etc., a hydrochlorofluorocarbon such as AK225cb, etc. Among them, since no dichloromethylene group will be formed in the ETFE copolymer, methyl chloride, 1,2-dichloroethane or AK225cb is preferred, and AK225cb is particularly preferred.

In the case of using or not using the above chain transfer agent having a chlorine atom, in the polymerization reaction system at the time of the production of the ETFE copolymer, a chain transfer agent having no chlorine atom may be added. In any case, by adjusting the total amount of the chain transfer agent, it becomes easy to adjust the molecular weight of the ETFE copolymer to be produced.

The chain transfer agent having no chlorine atom may, for example, be an alcohol such as methanol, ethanol, 2,2,2-trifluoroethanol, 2,2,3,3-tetrafluoropropanol, 1,1,1,3,3,3-hexafluoroisopropanol, 2,2,3,3,3-pentafluoropropanol, etc., a hydrocarbon such as n-pentane, n-hexane, cyclopentane, cyclohexane, etc., a hydrofluorocarbon such as $CH_2F_2$, etc., a ketone such as acetone, etc., a mercaptan such as methyl mercaptan, etc., an ester such as methyl acetate, ethyl acetate, etc., or an ether such as diethyl ether, methyl ethyl ether, etc.

Among them, from such a viewpoint that the chain transfer constant is higher, and stability of terminal groups of the obtainable ETFE copolymer will be high, at least one member selected from the group consisting of alcohols, hydrocarbons and hydrofluorocarbons, is preferred, one or both of an alcohol and a hydrocarbon are more preferred, and an alcohol is further preferred.

As the alcohol, methanol or ethanol is preferred, and methanol is especially preferred, since it is easily soluble in water, and after the production, it can easily be separated from the obtained ETFE copolymer.

As the hydrocarbon, n-pentane or cyclohexane is preferred, whereby the chain transfer constant is higher, the stability of terminal groups of the obtainable ETFE copolymer will be high, and the boiling point is sufficiently higher than room temperature and at most 100°C.

As the chain transfer agent, one type may be used alone, or two or more types may be used in combination. Further, only a chain transfer agent having a chlorine atom may be used alone, or only a chain transfer agent having no chlorine atom may be used alone, but there may be a case where it is advantageous to use them in combination in order to adjust the content of chlorine atoms in the ETFE copolymer to be within the range of the present invention.

As the combination of a chain transfer agent having a chlorine atom and a chain transfer agent having no chlorine atom, a combination of AK225cb and methanol is preferred. In that case, when the content by mass of methanol to be used, is set to be 1, the content by mass of AK225cb to be used, is preferably from 0.1 to 2.0, more preferably from 0.2 to 1.5, further preferably from 0.4 to 1.0.

<Polymerization medium>

The ETFE copolymer is prepared by polymerization in a polymerization medium. The polymerization medium is not particularly limited, so long as it is one to be commonly used in a polymerization reaction. The polymerization medium may be one having a chlorine atom, or it may be one having no chlorine atom, but a polymerization medium having no chlorine atom is more preferred, as it has no risk of ozone layer depletion. In the case of using a polymerization medium having chlorine, there may be a case where the polymerization medium having chlorine slightly undergoes a chain-transfer reaction to have a chlorine atom introduced into the ETFE copolymer. In such a case, the polymerization medium having chlorine may be used as a chain transfer agent while being used as a polymerization medium.

Specific examples of the polymerization medium may be perfluorocarbons, hydrofluorocarbons, hydrofluoroethers, etc.

The perfluorocarbons may, for example, be n-perfluorohexane, n-perfluoroheptane, perfluorocyclobutane, perfluorocyclohexane, perfluorobenzene, etc. The hydrofluorocarbons may, for example, be 1,1,2,2-tetrafluorocyclobutane, $CF_3CHF(CF_2)_3F$, $CF_3(CF_2)_4H$, $CF_3CF_2CHF(CF_2)_2F$, $CF_3(CHF)_2(CF_2)_2F$, $CHF_2CHF(CF_2)_3F$, $CF_3(CF_2)_5H$, $CF_3CH(CF_3)(CF_2)_3F$, $CF_3CF(CF_3)CHF(CF_2)_2F$, $CF_3CF(CF_3)(CHF)_2CF_3$, $CF_3CH(CF_3)CHF(CF_2)_2F$, $CF_3CF_2CH_2CH_3$, $CF_3(CF_2)_3(CH_2)_2H$, etc. Among them, $CF_3(CF_2)_5H$ is particularly preferred, since the chain transfer constant is thereby sufficiently small so that it does not act as a chain transfer agent, the boiling point is sufficiently higher than room temperature and at most 100°C so that it is easy to handle, and the slurry of the ETFE copolymer can be granulated while evaporating and recovering the polymerization medium in water.

The hydrofluoroether compounds may, for example, be compounds represented by the following formula (a).

$$C_mH_{2m+1-x}F_x\text{-0-}CnH_{2n+1-y}F_y \qquad (a)$$

[in the above formula (a), m is an integer of from 1 to 6, n is an integer of from 1 to 6, x is from 0 to (2m+1), y is from 0 to 2n, and (x+y) is at least 1.].

In the above formula (a), "$C_mH_{2m+1-x}F_x$" and "$C_nH_{2n+1-y}F_y$" may be linear or branched. The total number of carbon atoms in "$C_mH_{2m+1-x}F_x$" and "$C_nH_{2n+1-y}F_y$" is preferably from 3 to 8, more preferably from 4 to 6. If the total number of carbon atoms is less than the above lower limit value, it tends to be difficult to handle, since the boiling point tends to be too low. On the other hand, if the total number of carbon atoms is larger than the above upper limit value, the boiling point tends to be too high, and therefore, it becomes difficult to separate it from the polymer.

The total number of fluorine atoms in "$C_mH_{2m+1-x}F_x$" and "$C_nH_{2n+1-y}F_y$" is preferably at least 60% based on the total number of hydrogen atoms and fluorine atoms. It is preferred that the amount of fluorine atoms becomes large, since the chain transfer constant thereby becomes small, but it is not preferred that it becomes too large, since the global warming potential becomes high. Further, it is undesirable that the amount of the hydrogen atoms becomes too large, since the chain transfer constant thereby increases.

Further, from such a viewpoint that when fluorine atoms and hydrogen atoms are present as mixed, the chain transfer constant becomes smaller, it is preferred that fluorine atoms and hydrogen atoms are contained in both of "$C_mH_{2m+1-x}F_x$" and "$C_nH_{2n+1-y}F_y$", i.e., it is preferred that x is at least 1 and y is at least 1. However, in a case where m is 1 or 2, even if x is 0, the chain transfer constant is sufficiently small.

Specific examples of the compound represented by the formula (a) may be $CF_3CH_2O(CF_2)_2H$, $CHF_2CF_2CH_2O(CF_2)_2H$, $CH_3O(CF_2)_4H$, $CH_3OCF_2CF(CF_3)_2$, $CF_3CHFCF_2OCF_3$, etc. Among them, $CF_3CH_2O(CF_2)_2H$ is particularly preferred, since the chain transfer constant is thereby sufficiently small so that it does not act as a chain transfer agent, the boiling point is sufficiently higher than room temperature and at most 100°C, so that it is easy to handle, and it is possible to granulate the slurry of the ETFE copolymer while evaporating and recovering the polymerization medium in water.

<Polymerization initiator>

In the production of an ETFE copolymer, usually, a polymerization initiator is used to initiate the polymerization reaction.

The polymerization initiator may be one having a chlorine atom, or it may be one having no chlorine atom.

As the polymerization initiator, preferred is a radical polymerization initiator, with a temperature at which the half-life is 10 hours being from 0 to 100°C, and more preferred is a radical polymerization initiator, with such a temperature being from 20 to 90°C. Specific examples may be an azo compound such as azobisisobutyronitrile, etc., a peroxydicarbonate such as diisopropyl peroxydicarbonate, etc., a peroxy ester such as tert-butyl peroxypivalate, tert-butyl peroxyisobutyrate, tert-butyl peroxyacetate, etc., a non-fluorinated diacyl peroxide such as isobutyryl peroxide, octanoyl peroxide, benzoyl peroxide, lauroyl peroxide, etc., a fluorinated diacyl peroxide such as $(Z-(CF_2)pCOO)_2$ (wherein Z is a hydrogen atom, a fluorine atom or a chlorine atom, and p is an integer of from 1 to 10), etc., perfluoro tert-butyl peroxide, an inorganic peroxide such as potassium persulfate, sodium persulfate, ammonium persulfate, etc.

[Powder coating material]

The powder coating material of the present invention comprises the above-described ETFE copolymer. In addition to the ETFE copolymer, the powder coating material may contain a heat stabilizer and other additives. Hereinafter, the heat stabilizer and other additives will be described.

The powder coating material exhibits excellent heat resistance when it comprises the above-described ETFE copolymer, however, in order to further improve the heat resistance against heat received during the production, etc., it may contain a heat stabilizer other than the ETFE copolymer within a range not to impair the adhesion.

As the heat stabilizer, at least one member selected from the group consisting of copper compounds, tin compounds, iron compounds, lead compounds, titanium compounds and aluminum compounds, is preferred.

Specific examples of the heat stabilizer may be copper oxide, copper iodide, alumina, tin sulfate, germanium sulfate, basic lead sulfate, tin sulfite, barium phosphate, tin pyrophosphate, etc. Among them, copper oxide, copper iodide, alumina, tin sulfate, basic lead sulfate, tin sulfite or tin pyrophosphate is preferred, and copper oxide or copper iodide is particularly preferred.

In addition to the heat stabilizer, the powder coating material may contain other additives such as a pigment for coloring, etc., depending on the application and purpose.

The content of the heat stabilizer and other additives in the powder coating material is preferably from 0.0001 to 50 mass%, more preferably from 0.0002 to 20 mass%, based on the mass of the entire powder coating material. When the content of the heat stabilizer and other additives in the powder coating material is at least the above lower limit value, the functions of the heat stabilizer and other additives such as improvement of heat resistance and coloring will be added to the coating film. On the other hand, when it is at most the above upper limit value, the characteristics of the ETFE copolymer, such as chemical resistance, mechanical properties, etc., will not be degraded.

The average particle size of the powder in the powder coating material is preferably from 0.01 to 1,000 $\mu$m. When the average particle size is at least the above lower limit value, the handling as the powder becomes easier. On the other hand, when it is at most the above upper limit value, the surface smoothness after forming the coating film becomes better.

The average particle size when to be used in electrostatic coating is preferably from 0.5 to 300 $\mu$m, more preferably from 1 to 200 $\mu$m. Further, he average particle size when to be used in rotational molding is preferably from 1 to 500 $\mu$m, more preferably from 5 to 300 $\mu$m. In this specification, the average particle size of a powder means a 50% volume average particle size to be measured by a laser diffraction type particle size distribution measuring apparatus.

The method for producing the powder coating material is carried out by adding and mixing a compounding agent to the ETFE copolymer. The mixing method may be a known method in the production of powder coating materials.

Further, prior to mixing, the ETFE copolymer may be pulverized by a pulverizer such as a hammer mill, a turbo mill or a jet mill, to a powder of a desired particle size.

[Molded article]

A molded article of the present invention is made by forming a coating film by the above powder coating material, on a metal substrate surface, and comprises a metal substrate and a coating film formed on its surface by the above powder coating material.

The metal substrate may, for example, be steel material including iron, aluminum, copper, tin, titanium, chromium, nickel, zinc, etc.

Specific steel material may, for example, be general steel material such as SS400 stipulated in JIS G 3101, or stainless steel such as JIS SUS304 or JIS SUS316.

The thickness of the coating film is preferably from 1 $\mu$m to 10 mm, more preferably from 50 $\mu$m to 5 mm, particularly preferably from 100 $\mu$m to 3 mm. When the thickness of the coating film is at least the above lower limit value, excellent protection from corrosion of the metal substrate surface can be attained by the coating film. On the other hand, when it is at most the above upper limit value, the amount of the powder coating material to be used, is suppressed, whereby the raw material cost is suppressed.

The coating film may be formed on the entire surface of the metal substrate, or may be formed only on a part of the surface of the metal substrate. For example, it may be formed only on one surface of the metal substrate, or only on a portion of one surface of the metal substrate.

The shape of the molded article may, for example, be a pipe, a tube, a film, a plate, a tank, a roll, a vessel, a valve, an elbow, etc.

The method for forming a coating film on a metal substrate surface by using the powder coating material, may be a known method, and, for example, electrostatic powder coating or rotational molding, may be mentioned.

In the present invention, even when a coating film is formed directly on a metal substrate surface by the powder coating material, excellent adhesion between the coating film and the metal substrate is obtainable, but, if necessary, an optional layer such as a conventional primer layer may be provided between the coating film and the metal substrate. Such a primer layer may, for example, be one described in WO2015/083730.

According to the ETFE copolymer of the present invention, the formed coating film is excellent in adhesion to the metal substrate and excellent in heat resistance.

It is considered that a chlorine atom covalently bonded to any carbon atom of the ETFE copolymer tends to be reacted with a hydrogen atom or moisture covalently bonded to any carbon atom of the ETFE copolymer and thus detached from the carbon atom, to form hydrogen chloride. In a case where a coating film is formed on a metal substrate surface by the powder coating material comprising the ETFE copolymer, by the hydrogen chloride detached from ETFE copolymer, the metal substrate surface is roughened, or a reaction such as oxidation occurs. Then, the metal substrate surface will be in such a state that the surface area is increased or a new chemical bond is likely to be formed, whereby the ETFE copolymer tends to be easily anchored. As a result, it is considered that adhesion between the coating film and the metal substrate is increased.

On the other hand, chlorine atoms present in the molecule are likely to decompose the ETFE copolymer and thus tend to impair the properties such as heat resistance of the ETFE copolymer. However, from the study by the present inventors, it has been found that when the content of chlorine atoms in the ETFE copolymer is within the range of the present invention, the heat resistance of the ETFE copolymer is less likely to be lowered. Further, it has been found that by not containing a dichloromethylene group in the ETFE copolymer, the heat resistance of the ETFE copolymer is less likely to be lowered, particularly from the viewpoint of a concern about coloration at the time of heating.

Particularly when, as a method of introducing chlorine atoms, a method of using a chain transfer agent having a chlorine atom, particularly AK225cb, is employed, heat resistance of the coating film is less likely to be lowered. This is considered to be such that the chlorine atoms derived from the chain transfer agent are covalently bonded to carbon atoms at the terminal groups in the ETFE copolymer, and thus less likely to cause decomposition at the central portion of the ETFE copolymer or lowering of the average molecular weight of the ETFE copolymer.

Further, it is considered that chlorine atoms derived from a small amount of a chain transfer agent, tend to be preferentially introduced to an ETFE copolymer having a relatively small molecular weight, and tend to be less likely to be introduced to an ETFE copolymer having a relatively large molecular weight. As a result, the ETFE copolymer having a relatively large molecular weight, which is important for expressing heat resistance, is not substantially decomposed, and therefore, even if chlorine atoms are introduced into the ETFE copolymer, the heat resistance of the coating film is considered to be more easily maintained.

Further, it has been made clear that by using a chain transfer agent having no chlorine atom, particularly methanol, in combination as a chain transfer agent and by suitably adjusting its amount, it is possible to properly adjust the molecular weight of ETFE and at the same time, to adjust the content of chlorine atoms in the ETFE copolymer to be within the range of the present invention.

As described in the foregoing, the coating film formed by the powder coating material comprising the ETFE copolymer of the present invention will be excellent in adhesion and heat resistance.

EXAMPLES

Now, the present invention will be described in detail with reference to Examples, but the present invention should not be construed as being limited thereto.

[Evaluation methods]

(Volume flow rate: Q value ($mm^3$/sec.))

Represented by an extrusion rate when an ETFE copolymer is extruded, using a flow tester (CFT-100D manufactured by Shimadzu Corporation, furnace body cross-sectional area: 1 $cm^2$), from an orifice having a diameter of 2.1 mm and a length of 8 mm under a load of 7 kg at a temperature higher by 50°C than the melting point of the ETFE copolymer. However, in Examples, 297°C was used as the measurement temperature.

(Melting point (°C))

Obtained from the endothermic peak at the time of heating to 300°C at a rate of 10°C/min. in the air atmosphere by using a scanning differential thermal analyzer (DSC7200 manufactured by SII Inc.).

(Composition of ETFE copolymer (mol%))

Calculated from the results of the total fluorine amount measurement and melt F-NMR measurement.

(Content of chlorine atoms (mass ppm))

An ETFE copolymer was subjected to combustion treatment by an oxygen flask method as described in JIS K7229, and the generated decomposition gas was absorbed to an absorbing solution, whereupon chloride ions contained in the absorbing solution were quantified by an ion chromatography method (DX-500i manufactured by DIONEX).

(Tensile elongation retention (%))

An ETFE copolymer was press-molded to prepare a sheet of 1 mm in thickness. From the prepared sheet, a dumbbell-shaped test specimen of ASTM D-638 Type V was cut out and subjected to a tensile test at a tensile speed of 200 mm/min to measure the tensile elongation, which was adopted as the tensile elongation before heat treatment.
Then, the dumbbell-shaped test specimen was put in an oven at 200°C and heat-treated for 720 hours. After the heat treatment, by conducting the same tensile test as before the heat treatment, the tensile elongation was measured and adopted as the tensile elongation after the heat treatment.
The tensile elongation retention (%) was calculated by the following formula (2). Here, the higher the tensile elongation retention, the higher the heat resistance.

$$\text{Tensile elongation retention (\%)} = (\text{elongation after the heat treatment/elongation before the heat treatment}) \times 100 \qquad (2)$$

(Adhesive strength (N/cm))

SS400 steel material of 50 mm in length, 150 mm in width and 2 mm in thickness as stipulated in JIS G3101, was calcined at 400°C for 1 hour. Then, the surface of the calcined steel material was sand-blasted with alumina particles of 60 mesh so that the surface roughness (measured by JIS B0601) would be Ra = 5 to 10 $\mu$m. Then, the sandblasted surface of the steel material was cleaned with ethanol, to prepare a test sample metal substrate.
On the surface of the test sample metal substrate, a powder coating material comprising an ETFE copolymer, having the average particle size adjusted by freeze pulverization to 100$\pm$20 $\mu$m, was placed and heated in an oven at 300°C for 30 minutes, to form a coating film having a film thickness of 500$\pm$50 $\mu$m, thereby to obtain a test specimen.
At a longitudinal one end portion of the specimen, an incision was made for peeling between the resin film and the metal substrate by using a cutter knife. The peeled portion of the coating film was fixed to a chuck, and by using a tensile tester ("Tensilon" manufactured by A&D Company, Limited), the coating film was peeled to a position of 50 mm from the above one end portion. Peeling conditions were set to be such that the tensile speed was 50 mm/min, the angle between the test sample metal substrate and the coating film was 90-degree, and the maximum load was taken as the peel strength (unit: N/10 cm). Here, the larger the peel strength, the higher the adhesion between the coating film and the test sample metal substrate.

(Heat resistance test (coloring test))

Using a spacer of 50 mm in length × 70 mm in width and 1 mm in thickness, an ETFE copolymer was press-molded. At the time of pressing, the polymer was held at 320°C for 30 minutes under a pressure of 10 kgf/cm$^2$. The heat resistance of the polymer was evaluated by the colored degree of the press-molded sheet.

[Example 1]

Into a jacketed stainless steel polymerization vessel having an internal volume of 1.2 L, 0.74 L of a $CF_3(CF_2)_5H$ solution containing 0.54 mass% of $CH_2=CH(CF_2)_4F$ (hereinafter referred to as "PFBE") being FAE, 0.95 mass% of methanol being a chain transfer agent having no chlorine atom and 0.5 mass% of AK225cb being a chain transfer agent having a chlorine atom, was supplied by vacuuming. Then, while stirring the reaction solution, the inside of the polymerization vessel was heated to 66°C. Then, into the polymerization vessel, a mixed gas of TFE/E = 84/16 (molar ratio) was supplied to bring the internal pressure (gauge pressure) to be 1.5 MPaG, and 7.6 mL of a $CF_3(CF_2)_5H$ solution containing 1 mass% of tert-butyl peroxypivalate being a polymerization initiator, was supplied thereto, to initiate the polymerization reaction.

During the polymerization reaction, in order to maintain the internal pressure (gauge pressure) to be 1.5 MPaG, a mixed gas of TFE/E = 54/46 (molar ratio) was continuously supplied, and at the same time, PFBE corresponding to 1.5 mol% relative to the mixed gas, was continuously supplied. When 90 g of the mixed gas was charged, supply of the gas was stopped, then the polymerization vessel was cooled, and residual monomer gas was purged, to obtain a slurry of an ETFE copolymer.

The obtained slurry was transferred to a flask, water of the same volume as the slurry was added, and the solvent was removed while heating, to obtain the ETFE copolymer (hereinafter referred to as "ETFE1").

ETFE1 had a Q value of 34 m³/sec., a melting point of 258°C, a composition of TFE/E/PFBE = 53.0/45.5/1.5 (mol%), a chlorine content of 200 mass ppm, a tensile elongation retention of 103% and an adhesive strength of 45 N/cm. Further, in the coloring test, the pressed sheet was white and transparent.

[Example 2]

An ETFE copolymer (hereinafter referred to as "ETFE2") was obtained in the same manner as in Example 1 except that the composition in the $CF_3(CF_2)_5H$ solution to be supplied before initiation of polymerization was changed to 0.74 mass% of PFBE, 0.71 mass% of methanol and 0.7 mass% of AK225cb, further the supply amount of the $CF_3(CF_2)_5H$ solution containing 1 mass% of tert-butyl peroxypivalate was changed to 12 mL, and further, during the polymerization reaction, PFBE corresponding to 2.1 mol% was supplied to the mixed gas of TFE/E = 54/46 (molar ratio).

ETFE2 had a Q value of 31 mm³/sec., a melting point of 253°C, a composition of TFE/E/PFBE = 52.8/45.1/2.1 (mol%), a chlorine content of 310 mass ppm, a tensile elongation retention of 71% and an adhesive strength of 48 N/cm. Further, in the coloring test, the pressed sheet was white and transparent.

[EXAMPLE 3]

An ETFE copolymer (hereinafter referred to as "ETFE3") was obtained in the same manner as in Example 1 except that the composition in the $CF_3(CF_2)_5H$ solution to be supplied before initiation of polymerization was changed to 0.27 mass% of PFBE, 0.81 mass% of methanol and 0.6 mass% of AK225cb, further the supply amount of the $CF_3(CF_2)_5H$ solution containing 1 mass% of tert-butyl peroxypivalate was changed to 3.8 mL, and further, during the polymerization reaction, PFBE corresponding to 1.0 mol% was supplied to the mixed gas of TFE/E = 54/46 (molar ratio).

ETFE3 had a Q value of 5.8 mm³/sec., a melting point of 263°C, a composition of TFE/E/PFBE = 53.4/45.7/0.9 (mol%), a chlorine content of 240 mass ppm, a tensile elongation retention of 75% and an adhesive strength of 43 N/cm. Further, in the coloring test, the pressed sheet was white and transparent.

[Example 4]

An ETFE copolymer (hereinafter referred to as "ETFE11") was obtained in the same manner as in Example 1 except that the composition in the $CF_3(CF_2)_5H$ solution to be supplied before initiation of polymerization was changed to 0.4 mass% of AK225cb.

ETFE11 had a Q value of 32 mm³/sec., a melting point of 258°C, a composition of TFE/E/PFBE = 53.0/45.5/1.5 (mol%), a chlorine content of 150 mass ppm, a tensile elongation retention of 105% and an adhesive strength of 41 N/cm. Further, in the coloring test, the pressed sheet was white and transparent.

[Comparative Example 1]

An ETFE copolymer (hereinafter referred to as "ETFE4") was obtained in the same manner as in Example 1 except that the composition in the $CF_3(CF_2)_5H$ solution to be supplied before initiation of polymerization was changed to 0.38 mass% of PFBE, 0 mass% of methanol and 24 mass% of AK225cb, further the supply amount of the $CF_3(CF_2)_5H$ solution containing 1 mass% of tert-butyl peroxypivalate was changed to 3.8 mL, and further, during the polymerization reaction, PFBE corresponding to 1.0 mol% was supplied to the mixed gas of TFE/E = 54/46 (molar ratio).

ETFE4 had a Q value of 5.9 mm³/sec., a melting point of 262°C, a composition of TFE/E/PFBE = 53.3/45.7/1.0 (mol%), a chlorine content of 750 mass ppm, a tensile elongation retention of 38% and an adhesive strength of 55 N/cm.

[Comparative Example 2]

An ETFE copolymer (hereinafter referred to as "ETFE5") was obtained in the same manner as in Example 1 except that the composition in the $CF_3(CF_2)_5H$ solution to be supplied before initiation of polymerization was changed to 1.0 mass% of PFBE, 0 mass% of methanol and 34 mass% of AK225cb, further the supply amount of the $CF_3(CF_2)_5H$ solution containing 1 mass% of tert-butyl peroxypivalate was changed to 13 mL, and further, during the polymerization reaction, PFBE corresponding to 2.1 mol% was supplied to the mixed gas of TFE/E = 54/46 (molar ratio).
ETFE5 had a Q value of 29 $mm^3$/sec., a melting point of 252°C, a composition of TFE/E/PFBE = 52.9/44.9/2.2 (mol%), a chlorine content of 820 mass ppm, a tensile elongation retention of 45% and an adhesive strength of 58 N/cm.

[Comparative Example 3]

An ETFE copolymer (hereinafter referred to as "ETFE6") was obtained in the same manner as in Example 1 except that the composition in the $CF_3(CF_2)_5H$ solution to be supplied before initiation of polymerization was changed to 0.27 mass% of PFBE, 0.85 mass% of methanol and 0 mass% of AK225cb, further the supply amount of the $CF_3(CF_2)_5H$ solution containing 1 mass% of tert-butyl peroxypivalate was changed to 3.8 mL, and further, during the polymerization reaction, PFBE corresponding to 1.0 mol% was supplied to the mixed gas of TFE/E = 54/46 (molar ratio).
ETFE6 had a Q value of 32 $mm^3$/sec., a melting point of 259°C, a composition of TFE/E/PFBE = 53.3/45.7/1.0 (mol%), a chlorine content of 50 mass ppm, a tensile elongation retention of 77% and an adhesive strength of 33 N/cm.

[Comparative Example 4]

An ETFE copolymer (hereinafter referred to as "ETFE7") was obtained in the same manner as in Example 1 except that the composition in the $CF_3(CF_2)_5H$ solution to be supplied before initiation of polymerization was changed to 0.54 mass% of PFBE, 0.98 mass% of methanol and 0 mass% of AK225cb.
ETFE7 had a Q value of 30 $mm^3$/sec., a melting point of 257°C, a composition of TFE/E/PFBE = 52.9/45.5/1.6 (mol%), a chlorine content of 60 mass ppm, a tensile elongation retention of 105% and an adhesive strength of 35 N/cm.

[Comparative Example 5]

In this Example, as the polymerization medium, $CF_3CH_2O(CF_2)_2H$ was used.
Into a jacketed stainless steel polymerization vessel having an internal volume of 1.2 L, 0.74 L of the $CF_3CH_2O(CF_2)_2H$ solution containing 0.37 mass% of PFBE and 1.2 mass% of methanol, was supplied by vacuuming. Then, while stirring the reaction solution, the inside of the polymerization vessel was heated to 66°C. Then, into the polymerization vessel, a mixed gas of TFE/E = 84/16 (molar ratio) was supplied to bring the internal pressure (gauge pressure) to be 1.5 MPaG, and 6 mL of a $CF_3CH_2O(CF_2)_2H$ solution containing 1 mass% of tert-butyl peroxypivalate as a polymerization initiator, was supplied thereto, to initiate a polymerization reaction.
During the polymerization reaction, in order to maintain the internal pressure (gauge pressure) to be 1.5 MPaG, a mixed gas of TFE/E = 54/46 (molar ratio) was continuously supplied, and at the same time, PFBE corresponding to 1.0 mol% was continuously supplied to the mixed gas. When 90 g of the gas mixture was charged, the supply of the gas was stopped, then the polymerization vessel was cooled, and residual monomer gas was purged to obtain a slurry of an ETFE copolymer.
The obtained slurry was transferred to a flask, then water of the same volume as the slurry was added, and the solvent was removed while heating, to obtain the ETFE copolymer (hereinafter referred to as "ETFE8").
ETFE8 had a Q value of 28 $mm^3$/sec., a melting point of 265°C, a composition of TFE/E/PFBE = 53.3/45.7/1.0 (mol%), a chlorine content of 50 mass ppm, a tensile elongation retention of 81% and an adhesive strength of 33 N/cm.

[Comparative Example 6]

An ETFE copolymer (hereinafter referred to as "ETFE9") was obtained in the same manner as in Comparative Example 5 except that the composition in the $CF_3CH_2O(CF_2)_2H$ solution to be supplied before initiation of polymerization was changed to 0.56 mass% of PFBE and 0.7 mass% of methanol, further the supply amount of the $CF_3CH_2O(CF_2)_2H$ solution containing 1 mass% of tert-butyl peroxypivalate was changed to 7.7 mL, and further, during the polymerization reaction, PFBE corresponding to 1.5 mol% was supplied to the mixed gas of TFE/E = 54/46 (molar ratio).
ETFE9 had a Q value of 6 $mm^3$/sec., a melting point of 260°C, a composition of TFE/E/PFBE = 52.9/45.6/1.5 (mol%), a chlorine content of 60 mass ppm, a tensile elongation retention of 98% and an adhesive strength of 36 N/cm.

[Comparative Example 7]

An ETFE copolymer (hereinafter referred to as "ETFE10") was obtained in the same manner as in Comparative Example 5 except that the composition in the $CF_3CH_2O(CF_2)_2H$ solution to be supplied before initiation of polymerization was changed to 0.74 mass% of PFBE and 0.8 mass% of methanol, further the supply amount of the $CF_3CH_2O(CF_2)_2H$ solution containing 1 mass% of tert-butyl peroxypivalate was changed to 10 mL, and further, during the polymerization reaction, PFBE corresponding to 2.0 mol% was supplied to the mixed gas of TFE/E = 54/46 (molar ratio).

ETFE10 had a Q value of 18 mm³/sec., a melting point of 254°C, a composition of TFE/E/PFBE = 53.3/44.9/1.9 (mol%), a chlorine content of 60 mass ppm, a tensile elongation retention of 95% and an adhesive strength of 32 N/cm.

The results in Examples 1 to 3 and Comparative Examples 1 to 7 as described above, are shown in the following Table 1.

[Table 1]

| | Polymerization medium | Chain transfer agent | Content of chlorine atoms in ETFE copolymer (mass ppm) | Adhesive strength (N/cm) | Tensile elongation retention (%) |
|---|---|---|---|---|---|
| Example 1 | $CF_3(CF_2)_5H$ | AK225cb Methanol | 200 | 45 | 103 |
| Example 2 | $CF_3(CF_2)_5H$ | AK225cb Methanol | 320 | 48 | 71 |
| Example 3 | $CF_3(CF_2)_5H$ | AK225cb Methanol | 240 | 43 | 75 |
| Example 4 | $CF_3(CF_2)_5H$ | AK225cb Methanol | 150 | 41 | 105 |
| Comp. Ex. 1 | $CF_3(CF_2)_5H$ | AK225cb | 750 | 55 | 38 |
| Comp. Ex. 2 | $CF_3(CF_2)_5H$ | AK225cb | 820 | 58 | 45 |
| Comp. Ex. 3 | $CF_3(CF_2)_5H$ | Methanol | 50 | 33 | 77 |
| Comp. Ex. 4 | $CF_3(CF_2)_5H$ | Methanol | 60 | 35 | 105 |
| Comp. Ex. 5 | $CF_3CH_2O(CF_2)_2H$ | Methanol | 50 | 33 | 81 |
| Comp. Ex. 6 | $CF_3CH_2O(CF_2)_2H$ | Methanol | 60 | 36 | 98 |
| Comp. Ex. 7 | $CF_3CH_2O(CF_2)_2H$ | Methanol | 60 | 32 | 95 |

As shown in Table 1, the content of chlorine atoms in the ETFE copolymer was 200 mass ppm in Example 1, 320 mass ppm in Example 2, 240 mass ppm in Example 3, and 150 mass ppm in Example 4, whereby the adhesive strength was at least 41 N/cm and the tensile elongation retention was at least 71%. That is, it has been found that the coating films formed from the powder coating materials containing the ETFE copolymers in Examples 1 to 4 are excellent in adhesion to metal substrates, and excellent in heat resistance.

Whereas, the content of chlorine atoms in the ETFE copolymer was 750 mass ppm in Comparative Example 1, and 820 mass ppm in Comparative Example 2, whereby the tensile elongation retention was lower than in Examples 1 to 4, and thus, it has been found that the coating films formed from the powder coating materials containing the ETFE copolymers of Comparative Example 1 and Comparative Example 2 are inferior in heat resistance.

Further, the content of chlorine atoms in the ETFE copolymer is 50 mass ppm in Comparative Example 3 and Comparative Example 5, and 60 mass ppm in Comparative Example 4, Comparative Example 6 and Comparative Example 7, whereby the adhesive strength was lower than in Examples 1 to 4, and thus, it has been found that the coating films formed from the powder coating materials containing the ETFE copolymers in Comparative Examples 3 to 7 are poor in adhesion to metal substrates.

From the above results, the coating films formed from the powder coating materials containing the ETFE copolymers in Examples 1 to 4 have been found it possible to satisfy both adhesion to a metal substrate and heat resistance, which cannot be achieved by the coating films formed from the powder coating materials containing the ETFE copolymers in Comparative Examples 1 to 7.

INDUSTRIAL APPLICABILITY

A coating film formed by a coating material containing an ethylene/tetrafluoroethylene copolymer of the present invention, is excellent in heat resistance, chemical resistance, weather resistance and mechanical properties, and thus is widely useful e.g. as a lining film to be formed on a surface of a metal substrate such as steel material, for protecting such a surface from corrosion, etc.

**Claims**

1. An ethylene/tetrafluoroethylene copolymer, in which the content of chlorine atoms covalently bonded to any carbon atoms in the copolymer is from 100 to 500 mass ppm, according to a method wherein the copolymer is subjected to combustion treatment by an oxygen flask method as described in JIS K7229, and the generated decomposition gas is absorbed to an absorbing solution, whereupon chloride ions contained in the absorbing solution are quantified by an ion chromatography method.

2. The copolymer according to Claim 1, wherein the ethylene/tetrafluoroethylene copolymer has structural units based on ethylene, structural units based on tetrafluoroethylene and structural units based on another monomer, and has chlorine atoms covalently bonded to any carbon atoms in the copolymer.

3. The copolymer according to Claim 1 or 2, wherein the chlorine atoms are chlorine atoms covalently bonded to carbon atoms at terminals in the ethylene/tetrafluoroethylene copolymer.

4. The copolymer according to any one of Claims 1 to 3, which does not contain a dichloromethylene group.

5. The copolymer according to any one of Claims 1 to 4, wherein the total content of structural units based on ethylene and structural units based on tetrafluoroethylene in the copolymer is from 80 to 99.5 mol%, based on all structural units in the copolymer.

6. A coating material comprising the copolymer as defined in any one of Claims 1 to 5.

7. A powder coating material comprising the copolymer as defined in any one of Claims 1 to 5.

8. A molded article comprising a metal substrate and a coating film formed by the powder coating material as defined in Claim 7, on a surface of the metal substrate.

9. A method for producing the copolymer as defined in any one of Claims 1 to 5, **characterized in that** a monomer component comprising ethylene and tetrafluoroethylene is subjected to a polymerization reaction by using a chain transfer agent having a chlorine atom, to introduce into the copolymer all or some of the chlorine atoms covalently bonded to any carbon atoms in the copolymer.

10. The method for producing the copolymer according to Claim 9, wherein the monomer component comprising ethylene and tetrafluoroethylene is copolymerized in the presence of a chain transfer agent having a chlorine atom, a polymerization solvent containing no chlorine atom and a polymerization initiator.

11. The production method according to Claim 10, wherein tetrafluoroethylene, ethylene and a compound represented by $CH_2=CX(CF_2)_nY$ (wherein X and Y are each independently a hydrogen atom or a fluorine atom, and n is an integer of from 2 to 8) are copolymerized in the presence of a chain transfer agent containing 1,3-dichloro-1,1,2,2,3-pentafluoropropane, at least one polymerization medium selected from the group consisting of perfluorocarbons, hydrofluorocarbons and hydrofluoroalkyl ethers, and a polymerization initiator.

12. The production method according to Claim 11, wherein 1,3-dichloro-1,1,2,2,3-pentafluoropropane is present in an amount of from 0.05 to 10 mass%, based on the total mass of all monomer components.

13. The production method according to any one of Claims 9 to 12, wherein the chain transfer agent further contains a chain transfer agent having no chlorine atom.

14. The production method according to Claim 13, wherein the chain transfer agent having no chlorine atom is methanol.

15. The production method according to Claim 14, wherein the chain transfer agent comprises 1,3-dichloro-1,1,2,2,3-pentafluoropropane and methanol, and when the content by mass of methanol is set to be 1, the content by mass of 1,3-dichloro-1,1,2,2,3-pentafluoropropane is from 0.1 to 2.0.


**Patentansprüche**

1. Ethylen/Tetrafluorethylen-Copolymer, in dem der Gehalt von Chloratomen, die an irgendwelche Kohlenstoffatome in dem Copolymer kovalent gebunden sind, von 100 bis 500 Massen-ppm nach einem Verfahren, in dem das Copolymer einer Verbrennungsbehandlung durch ein Sauerstoffkolbenverfahren, wie beschrieben in JIS K7229, unterzogen wird und das erzeugte Zersetzungsgas in eine absorbierende Lösung absorbiert wird, woraufhin Chloridionen, die in der absorbierenden Lösung enthalten sind, durch ein Ionenchromatographieverfahren quantifiziert werden, beträgt.

2. Copolymer nach Anspruch 1, wobei das Ethylen/Tetrafluorethylen-Copolymer strukturelle Einheiten, die auf Ethylen basieren, strukturelle Einheiten, die auf Tetrafluorethylen basieren, und strukturelle Einheiten, die auf einem anderen Monomer basieren, aufweist und Chloratome, die an irgendwelche Kohlenstoffatome in dem Copolymer kovalent gebunden sind, aufweist.

3. Copolymer nach Anspruch 1 oder 2, wobei die Chloratome Chloratome sind, die kovalent an Kohlenstoffatome an Enden in dem Ethylen/Tetrafluorethylen-Copolymer gebunden sind.

4. Copolymer nach einem der Ansprüche 1 bis 3, das nicht eine Dichlormethylen-Gruppe enthält.

5. Copolymer nach einem der Ansprüche 1 bis 4, wobei der Gesamtgehalt von strukturellen Einheiten, die auf Ethylen basieren, und strukturellen Einheiten, die auf Tetrafluorethylen basieren, in dem Copolymer von 80 bis 99,5 Mol%, basierend auf allen strukturellen Einheiten in dem Copolymer, beträgt.

6. Beschichtungsmaterial, umfassend das Copolymer nach einem der Ansprüche 1 bis 5.

7. Pulverbeschichtungsmaterial, umfassend das Copolymer nach einem der Ansprüche 1 bis 5.

8. Geformter Gegenstand, umfassend ein Metallsubstrat und einen Beschichtungsfilm, der durch das Pulverbeschichtungsmaterial nach Anspruch 7 auf einer Oberfläche des Metallsubstrats gebildet ist.

9. Verfahren zur Herstellung des Copolymers nach einem der Ansprüche 1 bis 5, **dadurch gekennzeichnet, dass** eine Monomerkomponente, die Ethylen und Tetrafluorethylen umfasst, einer Polymerisationsreaktion unter Verwendung eines Kettenübertragungsmittels, das ein Chloratom aufweist, unterworfen wird, um in das Copolymer alle oder einige der Chloratome, die an irgendwelche Kohlenstoffatome in dem Copolymer kovalent gebunden sind, einzuführen.

10. Verfahren zur Herstellung des Copolymers nach Anspruch 9, wobei die Monomerkomponente, die Ethylen und Tetrafluorethylen umfasst, in der Gegenwart eines Kettenübertragungsmittels, das ein Chloratom aufweist, eines Polymerisationslösungsmittels, das kein Chloratom enthält, und eines Polymerisationsinitiators copolymerisiert wird.

11. Herstellungsverfahren nach Anspruch 10, wobei Tetrafluorethylen, Ethylen und eine Verbindung, dargestellt durch $CH_2=CX(CF_2)_nY$ (wobei X und Y jeweils unabhängig ein Wasserstoffatom oder ein Fluoratom sind und n eine ganze Zahl von 2 bis 8 ist), in der Gegenwart eines Kettenübertragungsmittels, das 1,3-Dichlor-1,1,2,2,3-pentafluorpropan enthält, mindestens eines Polymerisationsmediums, ausgewählt aus der Gruppe, bestehend aus Perfluorkohlenstoffen, Fluorkohlenwasserstoffen und Hydrofluoralkylethern, und eines Polymerisationsinitiators copolymerisiert werden.

**12.** Herstellungsverfahren nach Anspruch 11, wobei 1,3-Dichlor-1,1,2,2,3-pentafluorpropan in einem Gehalt von 0,05 bis 10 Massen-%, basierend auf der Gesamtmasse aller Monomerkomponenten, vorhanden ist.

**13.** Herstellungsverfahren nach einem der Ansprüche 9 bis 12, wobei das Kettenübertragungsmittel weiter ein Kettenübertragungsmittel enthält, das kein Chloratom aufweist.

**14.** Herstellungsverfahren nach Anspruch 13, wobei das Kettenübertragungsmittel, das kein Chloratom aufweist, Methanol ist.

**15.** Herstellungsverfahren nach Anspruch 14, wobei das Kettenübertragungsmittel 1,3-Dichlor-1,1,2,2,3-pentafluorpropan und Methanol umfasst und, wenn der Massengehalt von Methanol als 1 eingestellt wird, der Massengehalt von 1,3-Dichlor-1,1,2,2,3-pentafluorpropan von 0,1 bis 2,0 beträgt.

**Revendications**

**1.** Copolymère d'éthylène/tétrafluoroéthylène, dans lequel la teneur en atomes de chlore liés de manière covalente à de quelconques atomes de carbone dans le copolymère est de 100 à 500 ppm en masse, conformément à un procédé dans lequel le copolymère est soumis à un traitement de combustion par un procédé à flacon d'oxygène comme décrit dans la norme JIS K7229, et le gaz de décomposition généré est absorbé par une solution absorbante, après quoi les ions chlorure contenus dans la solution absorbante sont quantifiés par un procédé de chromatographie ionique.

**2.** Copolymère selon la revendication 1, dans lequel le copolymère d'éthylène/tétrafluoroéthylène possède des motifs structurels à base d'éthylène, des motifs structurels à base de tétrafluoroéthylène et des motifs structurels à base d'un autre monomère, et possède des atomes de chlore liés de manière covalente à de quelconques atomes de carbone dans le copolymère.

**3.** Copolymère selon la revendication 1 ou 2, dans lequel les atomes de chlore sont des atomes de chlore liés de manière covalente à des atomes de carbone terminaux dans le copolymère d'éthylène/tétrafluoroéthylène.

**4.** Copolymère selon l'une quelconque des revendications 1 à 3, qui ne contient pas de groupe dichlorométhylène.

**5.** Copolymère selon l'une quelconque des revendications 1 à 4, dans lequel la teneur totale en les motifs structurels à base d'éthylène et les motifs structurels à base de tétrafluoroéthylène dans le copolymère est de 80 à 99,5 % en moles par rapport à tous les motifs structurels dans le copolymère.

**6.** Matériau de revêtement comprenant le copolymère tel que défini dans l'une quelconque des revendications 1 à 5.

**7.** Matériau de revêtement en poudre comprenant le copolymère tel que défini dans l'une quelconque des revendications 1 à 5.

**8.** Article moulé comprenant un substrat métallique et un film de revêtement formé par le matériau de revêtement en poudre tel que défini dans la revendication 7, sur une surface du substrat métallique.

**9.** Procédé pour produire le copolymère tel que défini dans l'une quelconque des revendications 1 à 5, **caractérisé en ce qu'**un composant monomère comprenant de l'éthylène et du tétrafluoroéthylène est soumis à une réaction de polymérisation par utilisation d'un agent de transfert de chaîne possédant un atome de chlore, pour introduire dans le copolymère tout ou partie des atomes de chlore liés de manière covalente à de quelconques atomes de carbone dans le copolymère.

**10.** Procédé pour produire un copolymère selon la revendication 9, dans lequel le composant monomère comprenant de l'éthylène et du tétrafluoroéthylène est copolymérisé en présence d'un agent de transfert de chaîne possédant un atome de chlore, d'un solvant de polymérisation ne contenant pas d'atome de chlore, et d'un amorceur de polymérisation.

**11.** Procédé de production selon la revendication 10, dans lequel du tétrafluoroéthylène, de l'éthylène et un composé représenté par $CH_2=CX(CF_2)_nY$ (où chacun de X et Y est indépendamment un atome d'hydrogène ou un atome de fluor, et n est un entier de 2 à 8) sont copolymérisés en présence d'un agent de transfert de chaîne contenant du 1,3-dichloro-1,1,2,2,3-pentafluoropropane, d'au moins un milieu de polymérisation choisi dans l'ensemble constitué par les perfluorocarbures, les hydrofluorocarbures et les hydrofluoroalkyléthers, et d'un amorceur de polymérisation.

12. Procédé de production selon la revendication 11, dans lequel le 1,3-dichloro-1,1,2,2,3-pentafluoropropane est présent en une quantité de 0,05 à 10 % en masse par rapport à la masse totale de tous les composants monomères.

13. Procédé de production selon l'une quelconque des revendications 9 à 12, dans lequel l'agent de transfert de chaîne contient en outre un agent de transfert de chaîne ne possédant pas d'atome de chlore.

14. Procédé de production selon la revendication 13, dans lequel l'agent de transfert de chaîne ne possédant pas d'atome de chlore est le méthanol.

15. Procédé de production selon la revendication 14, dans lequel l'agent de transfert de chaîne comprend du 1,3-dichloro-1,1,2,2,3-pentafluoropropane et du méthanol et, lorsque la quantité en masse de méthanol est établie à 1, la quantité en masse de 1,3-dichloro-1,1,2,2,3-pentafluoropropane va de 0,1 à 2,0.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006167689 A
- JP 2014015551 A
- WO 2008069278 A
- WO 2015083730 A